# EUROPÄISCHE PATENTSCHRIFT

(11) **EP 1 291 222 B1**
(45) Veröffentlichungstag und Bekanntmachung des Hinweises auf die Patenterteilung: **08.02.2006**
(21) Anmeldenummer: 02017286.2
(22) Anmeldetag: 01.08.2002
(51) Int. Cl.: B60K 15/03

(54) **Kraftstoffbehälter**
Fuel tank
Reservoir de carburant

(30) Priorität: 10.09.2001 DE 10144543
(43) Veröffentlichungstag der Anmeldung: 12.03.2003
(73) Patentinhaber: Kautex Textron GmbH & Co. KG., 53229 Bonn (DE)
(72) Erfinder: Reinelt, Georg, 53229 Bonn (DE); Koith, Jörg, 53819 Neunkirchen-Seelscheid (DE)
(74) Vertreter: Lippert, Stachow & Partner

(56) Entgegenhaltungen:
- GB-A- 2 284 581
- US-A- 4 591 319
- US-A- 4 651 701
- US-A- 5 404 907
- US-A- 5 992 441
- US-A- 6 058 963
- PATENT ABSTRACTS OF JAPAN vol. 1997, no. 11, 28. November 1997 (1997-11-28) & JP 09 195876 A (YUTANI HEAVY IND LTD), 29. Juli 1997 (1997-07-29)

## Beschreibung

Insbesondere bei der Herstellung und Ausstattung von Kraftstoffbehältern aus Kunststoff, die durch Extrusionsblasformen erhalten wurden, ist oftmals der Einbau und die Halterung von Funktionsbauteilen problematisch. Als solche Funktionsbauteile kommen beispielsweise Entlüftungsventile, Roll-Over-Ventile, Geber, Leitungen und dergleichen in Betracht. Diese Bauteile müssen innerhalb des Kraftstoffbehälters platziert und fixiert werden. Da Kraftstoffbehälter aus Kunststoff weitestgehend für flüssige Kohlenwasserstoffe impermeabel und dicht sein sollen, kommen Befestigungsvarianten, bei denen die Behälterwandung verletzt werden muss, nicht in Betracht. Solche Bauteile werden daher in der Regel mit besonderen Haltern an der Innenwandung des Kraftstoffbehälters verschweißt, und zwar in unmittelbarer Nähe einer größeren Montageöffnung des Kraftstoffbehälters. Schließlich kann auch eine anschließend gas- und flüssigkeitsdicht zu verschweißende Montageöffnung zur Aufnahme von Halterungen von Funktionsbauteilen dienen.

Planmäßig vorgesehene Öffnungen in dem Kraftstoffbehälter, die zur Befestigung von Funktionsbauteilen dienen könnten, wie beispielsweise eine Montageöffnung oder eine Einfüllöffnung, sollten möglichst auf ein Minimum reduziert werden, da solche Öffnungen potentielle Schwachstellen des Systems in Hinblick auf die Dichtigkeit sind.

Der Erfindung liegt die Aufgabe zugrunde, einen Kraftstoffbehälter aus Kunststoff, insbesondere einen extrusionsblasgeformten Kraftstoffbehälter aus Kunststoff, hinsichtlich der Befestigungsmöglichkeiten von Funktionsbauteilen innerhalb desselben zu verbessern.

Ein gattungsgemäßer Kraftstoffbehälter behälter ist aus der US 6 058 963 A bekannt.

Erfindungsgemäß ist daher ein Kraftstoffbehälter aus Kunststoff mit wenigstens einer Halterung zur Befestigung von Funktionsbauteilen im Inneren des Behälters vorgesehen, wobei die Halterung wenigstens ein Verbindungselement zur Aufnahme des Funktionsbauteils aufweist oder das Verbindungselement als Bestandteil des Funktionsbauteils ausgebildet ist, das Verbindungselement in einer Öffnung der Behälterwand diese durchsetzend verrastet ist und wobei die Öffnung an der Behälteraußenseite mit einem Verschluss in Form eines Deckels oder einer Kappe gegenüber der Atmosphäre abgedichtet ist oder mit einem Anschlussbauteil versehen ist.

Die Erfindung macht sich in vorteilhafter Art und Weise zunutze, dass bei extrusionsblasgeformten Kunststoff-Kraftstoffbehältern in der Behälterwandung Öffnungen ohnehin unplanmäßig vorgesehen sind. Hierbei handelt es sich beispielsweise um Öffnungen, die von Blasnadeln oder Blasdornen während des Extrusionsblasvorgangs erzeugt wurden. Solche Öffnungen müssen nachträglich verschlossen werden, falls an deren Ort nicht ohnehin eine Öffnung vorgesehen werden sollte.

Die Erfindung macht sich diese Öffnung zur Befestigung von Funktionsbauteilen innerhalb des Kraftstoffbehälters zunutze. Gemäß der Erfindung ist vorgesehen, dass in diese Öffnungen ein Adapter als Verbindungselement eingesetzt wird, welcher beispielsweise mit dem Funktionsbauteil verrastet werden kann. Alternativ kann der Adapter bzw. das Verbindungselement einstückig mit dem Funktionsbauteil ausgebildet sein.

Gemäß der bevorzugten Ausführungsform der Erfindung ist vorgesehen, dass der Verschluss oder das Anschlussbauteil mit der Behälterwand verschweißt sind.

Zwecks Verrastung in der Öffnung der Behälterwand kann das Verbindungselement an seinem Außenumfang Rastelemente aufweisen, die in Einbaulage formschlüssig die Behälterwandung hintergreifen.

Ein so ausgebildetes verbindungselement kann mit dem daran angeordneten oder befestigten Funktionsbauteil durch eine Montageöffnung des Behälters von innen her in diesem montiert werden.

Vorzugsweise ist das Verbindungselement hierfür als etwa rohrförmiger, stirnseitig offener Körper ausgebildet, der an seinem Außenumfang federnd nachgiebig ausgebildete Wandabschnitte aufweist, auf denen Schnappnasen als Rastelemente vorgesehen sind. Das Verbindungselement kann von innen her in die betreffende Öffnung der Behälterwandung so eingesteckt worden sein, dass die Rastelemente die Behälterwandung auf deren Außenseite hintergreifen.

Zweckmäßigerweise ist in die offene Stirnseite des verbindungselements in Einbaulage desselben ein Sicherungselement eingesetzt, welches eine verriegelung der Rastelemente in der die Behälterwandung hintergreifenden Stellung bewirkt.

Das Sicherungselement kann beispielsweise als in die Stirnöffnung des verbindungselements einzusetzendes Spreizelement ausgebildet sein.

Zur axialen Fixierung des verbindungselements in seiner Einbaulage ist zweckmäßigerweise wenigstens ein Gegenhalter vorgesehen.

Im einfachsten Falle kann beispielsweise der Verschluss gleichzeitig als Gegenhalter ausgebildet sein.

Alternativ können als Gegenhalter federnd ausgebildete Stützfüße oder ein entsprechend ausgebildeter Stützkragen am Außenumfang des Verbindungselements vorgesehen sein, die so angeordnet sind, dass sie das verbindungselement in der Einbaulage unter Vorspannung gegen die Behälterinnenwandung abstützen.

Die Stützfüße oder der Stützkragen sind vorzugsweise auf dem Außenumfang des verbindungselements so angeordnet, dass diese in einer definierten Bezugsebene relativ zur Außenhaut des Kraftstoffbehälters angeordnet sind. Hierdurch ist es einerseits möglich, das Funktionsbauteil unabhängig von der Wanddicke des Kraftstoffbehälters zu befestigen, andererseits können auch Materialanhäufungen an der Innenwandung, die beispielsweise durch das Durchstoßen einer Blasnadel verursacht wurden, ausgeglichen bzw. überbrückt werden.

Bei einer anderen Ausgestaltung ist vorgesehen, dass der Gegenhalter als Stützteller ausgebildet ist, der mit einem in die offene Stirnseite des Verbindungselements eingesetzten: Stützdeckel über ein diese verbindendes Zugelement zusammenwirkt und sich dadurch unter Vorspannung gegen die Behälterwandung abstützt. Der Stützteller kann beispielsweise als Metallteil ausgebildet sein. Als Zugelement kann eine Blindniete vorgesehen sein, die sich außen durch einander fluchtend gegenüberliegende Öffnungen von Stützdeckel und Stützteller eingebracht wurde. Der Stützteller dient dabei gleichzeitig als Sicherungselement bzw. als Spreizelement.

Dieser kann an seinem Außenumfang auf seiner der Behälterinnenwandung zugekehrten Seite mit Krallen versehen sein, die sich vorteilhafter Weise in die Behälterinnenwandung eingraben.

Bei einer anderen bevorzugten Ausführungsform der Erfindung ist vorgesehen, dass das Sicherungselement mit dem Verschluss in Gestalt einer Abdeckkappe verbunden ist. Dieses kann einerseits einstückig mit der Abdeckkappe ausgebildet sein, alternativ kann vorgesehen sein, dass die Abdeckkappe mit dem in das Verbindungselement eingesetzten Spreizelement verschweißt wurde und zwar gleichzeitig mit der Verschweißung mit der Außenwandung des Kraftstoffbehälters.

Die Rastelemente am Außenumfang des Verbindungselements können mit entsprechenden Ausnehmungen in der Öffnung der Behälterwandung so zusammenwirken, dass eine eindeutige Orientierung des Verbindungselements in Umfangsrichtung (Codierung) gewährleistet ist, was beispielsweise bei der Anordnung von Füllstandsbegrenzungsventilen in dem Kraftstoffbehälter wichtig ist.

Bei einem weiteren Ausführungsbeispiel der Erfindung ist vorgesehen, dass das Anschlussbauteil als Anschlussnippel ausgebildet ist, wobei das verbindungselement und das Funktionsbauteil miteinander kommunizieren. Das Funktionsbauteil kann in diesem Falle beispielsweise als Entlüftungsventil ausgebildet sein, wobei die Öffnung in der Behälteraußenseite in diesem Falle sowohl der Befestigung des Funktionsbauteils als auch der Durchführung der ohnehin benötigten Entlüftungsleitung dient.

Durch diese Anordnung wird insbesondere die Blindmontage von aus dem Kraftstoffbehälter herauszuführenden Leitungen wesentlich vereinfacht. Bisher war es erforderlich, die betreffenden Leitungen von Hand innerhalb des Kraftstoffbehälters blind auf einen von außen durch eine Öffnung des Behälters zur Verfügung gestellten Nippel aufzustecken. Bei der Ausführungsform des erfindungsgemäßen Kraftstoffbehälters gemäß dem hier beschriebenen Ausführungsbeispiel ist eine Vormontage von Schläuchen und Anschlusselementen und/oder Funktionsbauteilen, wie eingangs bereits beschrieben, außerhalb des Kraftstoffbehälters möglich.

Alternativ kann vorgesehen sein, dass das Anschlussbauteil als Abdeckkappe mit Anschlussnippel ausgebildet ist, wobei auch in diesem Fall das Verbindungselement und das Funktionsbauteil miteinander kommunizieren.

Bei einer weiteren Variante des Kraftstoffbehälters gemäß der Erfindung ist vorgesehen, dass das Anschlussbauteil als in das Verbindungselement eingesetzte Hülse ausgebildet ist, die mit einem umlaufenden Kragen als Befestigungsflansch für ein weiteres Anschlussbauteil versehen ist. Diese Hülse kann beispielsweise aus einem mit dem Anschlussbauteil verschweißbaren Kunststoff bestehen, dessen Eigenschaften sich von demjenigen Kunststoff unterscheiden, aus welchem das Funktionsbauteil besteht. Funktionsbauteile wie Ventile bestehen in der Regel aus POM (Polyoxymethylen), welcher Kunststoff in Gegenwart von Kohlenwasserstoffen nicht quillt, jedoch mit der Behälterwandung nicht verschweißbar ist.

Die Erfindung wird nachstehend anhand von in den Zeichnungen dargestellten Ausführungsbeispielen erläutert.
Es zeigen
- Figur 1: eine Ansicht eines Kraftstoffbehälters gemäß der Erfindung, teilweise im Schnitt,
- Figur 2: einen vergrößerten Teilschnitt des Kraftstoffbehälters im Bereich einer in diesen eingesetzten Halterung nach einem ersten Ausführungsbeispiel der Erfindung,
- Figur 3: einen Schnitt durch eine Halterung nach einem zweiten Ausführungsbeispiel,
- Figur 4: einen Schnitt durch eine Halterung nach einem dritten Ausführungsbeispiel,
- Figur 5: einen Schnitt entlang der Linien V-V in Figur 4,
- Figur 6: einen Schnitt durch eine Halterung nach dem vierten Ausführungsbeispiel,
- Figur 7: einen Schnitt durch eine Halterung nach einem fünften Ausführungsbeispiel der Erfindung,
- Figur 8: einen Schnitt durch eine Halterung nach einem sechsten Ausführungsbeispiel der Erfindung,
- Figur 9: einen Schnitt durch eine Halterung nach einem siebten Ausführungsbeispiel der Erfindung,
- Figur 10: einen Schnitt durch eine Halterung nach einem achten Ausführungsbeispiel der Erfindung und
- Figur 11: einen Schnitt durch eine Halterung nach einem neunten Ausführungsbeispiel der Erfindung.

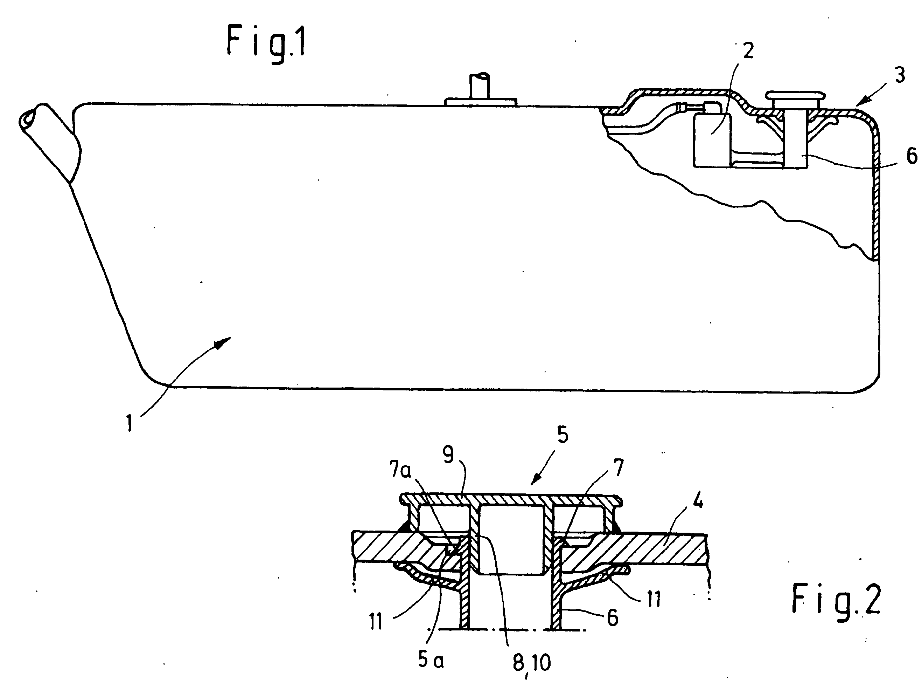

Der in Figur 1 dargestellte Kraftstoffbehälter 1 ist im wesentlichen einteilig ausgebildet und wurde durch Extrusionsblasfórmen aus thermoplastischem Material erhalten.

Mit 2 ist ein innerhalb des Kraftstoffbehälters 1 angeordnetes Roll-Over-Ventil bezeichnet, das über eine Halterung 3 an bzw. in der Behälterwand 4 befestigt ist. Die hierzu in der Behälterwand genutzte Öffnung 5 ist als Einstichloch einer Blasnadel in der Behälterwand 4 verblieben und wird gemäß der Erfindung zur Aufnahme eines Verbindungselements 6 der Halterung 3 genutzt. Die gesamte Halterung 3 ist ebenfalls überwiegend aus thermoplastischem Material ausgebildet, diese kann beispielsweise durch Spritzgießen hergestellt worden sein. Wie der Figur 1 zu entnehmen ist, ist das Verbindungselement 6 an seinem von der Behälterwand 4 abliegenden Ende einstückig mit dem Roll-Over-Ventil 2 verbunden. Alternativ kann vorgesehen sein, dass die beiden Bauteile verrastet oder verklipst oder auch verschraubt sind.

Bei dem in Figur 2 gezeigten Ausführungsbeispiel ist am Außenumfang des Verbindungselements 6 eine Positioniernase 7a vorgesehen, die in eine der Größe der Positioniernase 7a etwa entsprechende Ausnehmung 5a in der Außenseite der Behälterwand 4 randseitig der Öffnung 5a eingreift. Die Positioniernase 7a und die Ausnehmung 5a dienen zur drehfesten Arretierung des verbindungselements 6, um eine eindeutige Orientierung desselben in Umfangsrichtung (Codierung bzw. Indexierung) zu gewährleisten.

Das Verbindungselement 6 ist als rohrförmiger, stirnseitig offener Körper ausgebildet, der an seinem Außenumfang mit mehreren Schnappnasen 7 versehen ist, die die Behälterwand in der Einbaulage formschlüssig hintergreifen, wie dies beispielsweise Figur 2 zu entnehmen ist. Die betreffenden Wandabschnitte des Verbindungselements 6 sind federnd nachgiebig ausgebildet, z.B. durch sich in axialer Richtung des Verbindungselements 6 erstreckende Schlitze, so dass das Verbindungselement 6 mit den Schnappnasen voran aus dem Inneren des Behälters in die Öffnung 5 eingesetzt werden kann.

Zur Sicherung der als Rastelemente ausgebildeten Schnappnasen 7 in der die Behälterwand 4 hintergreifenden Stellung ist ein stirnseitig in das Verbindungselement 6 einzuführendes Spreizelement 8 vorgesehen. Im Falle des ersten Ausführungsbeispiels gemäß Figur 2 ist das Spreizelement in Form eines zylindrischen Stopfens einstückig mit einer Abdeckkappe 9 zur Abdichtung der Öffnung 5 ausgebildet. Die Abdeckkappe 9 ist mit ihrer der Behälterwand 4 zugewandten Stirnfläche mit letzterer verschweißt, wobei der stutzenförmige Fortsatz 10 der Abdeckkappe 9 in dieser Lage in das stirnseitig offene Verbindungselement 6 hineinragt und die Schnappnasen 7 gegen die Behälterwand 4 sichert.

Die Behälterwand 4 besteht vorzugsweise aus einem mehrschichtigen Extrudat mit einer oder mehreren Barriereschichten für Kohlenwasserstoffe, wobei die Außenhaut bzw. die äußerste Schicht der Behälterwand 4 beispielsweise aus PE bestehen kann. In diesem Falle wäre die Abdeckkappe 9 ebenso aus PE auszubilden, um die Verschweißbarkeit dieser mit der Behälterwand 4 zu gewährleisten. Das Verbindungselement 6 kann demgegenüber aus einem nicht mit der Behälterwand 4 verschweißbaren Material, beispielsweise aus POM bestehen. Zur axialen Sicherung des Verbindungselements 6 gegen die Behälterwand 4 sind an diesem mit Abstand von den Schnappnasen 7 sich radial erstreckende Stützfüße 11 vorgesehen. Im einfachsten Fall können zwei Stützfüße 11 vorgesehen sein, es ist aber auch möglich, dass mehr als zwei Stützfüße 11 gleichmäßig über den Umfang des Verbindungselements 6 verteilt angeordnet sind. Die Stützfüße 11 wirken als Gegenhalter und stützen das verbindungselement 6 unter Vorspannung gegen die Innenseite der Behälterwand 4 ab. Um eine Verrastung des Verbindungselements 6 unter Vorspannung zu gewährleisten, sind die Stützfüße 11 ebenfalls federelastisch ausgebildet. Deren Abstand zu den Schnappnasen 7 ist so gewählt, dass ein sicherer Sitz des Verbindungselements 6 bei verschiedenen Wandstärken der Behälterwand 4 gewährleistet ist. So wird mit Bezug auf die Anlage der Schnappnasen 7 an der Außenhaut des Kraftstoffbehälters eine definierte Anlage sichergestellt, ohne dass sich das Verbindungselement (6) innerhalb der Öffnung 5 verschieben kann.

Die Stützfüße 11 haben zudem den Vorzug, dass sie, wie aus Figur 2 ersichtlich ist, etwaige Unebenheiten oder Materialanhäufungen im Bereich der Mündung der Öffnung 5 in dem Behälterinneren überbrücken.

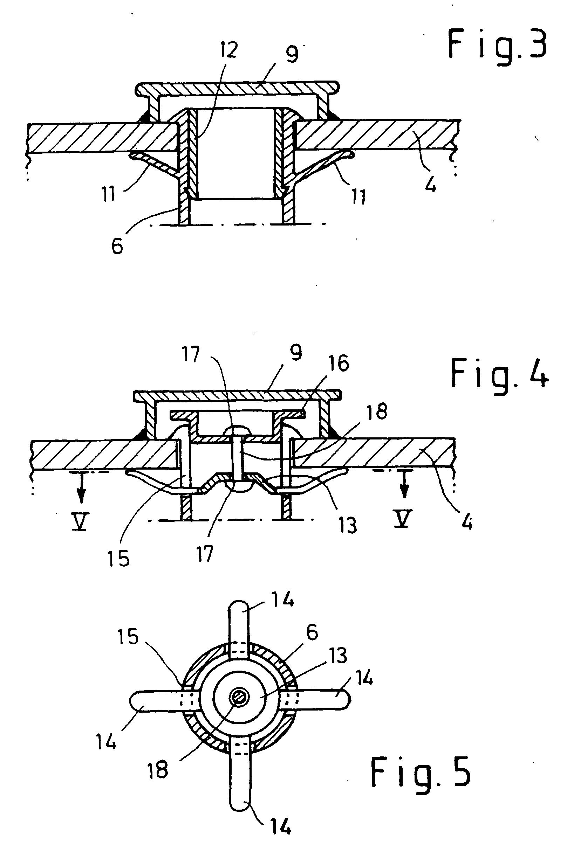

In Figur 3 ist ein zweites Ausführungsbeispiel des Kraftstoffbehälters gemäß der Erfindung dargestellt, bei welchem als Spreizelement ein Rohrabschnitt 12 in das Verbindungselement 6 eingesetzt ist. Im übrigen entspricht die Anordnung der in Figur 2 gezeigten Anordnung.

In den Figuren 4 und 5 ist ein drittes Ausführungsbeispiel der Erfindung dargestellt, bei welchem der Gegenhalter als metallener Stützteller 13 ausgebildet ist, der umfänglich mit sich radial auswärts erstreckenden krallenförmigen Fortsätzen 14 versehen ist. Der Stützteller 13 ist stirnseitig in das Verbindungselement 6 eingelegt, wobei dieser über die krallenförmigen Fortsätze 14 in entsprechend dimensionierten Ausnehmungen 15 des Verbindungselements 6 verschieblich geführt ist. Die Ausnehmungen 15 entsprechen in ihrer Anzahl der Anzahl der krallenförmigen Fortsätze 14. Die Ausnehmungen 15 erstrecken sich in Längsrichtung des Verbindungselements 6 an dessen mit den Schnappnasen 7 versehenem Ende, wobei die Breite der Ausnehmungen 15 in etwa der Breite der krallenförmigen Fortsätze 14 entspricht oder unwesentlich größer bemessen ist. Als Spreizelement ist ein in das stirnseitig offene Ende des Verbindungselements 6 einzusetzender Stützdeckel 16 vorgesehen. Der Stützdeckel 16 und der Stützteller 13 sind jeweils mit Bohrungen 17 versehen, die in Einbaulage zueinander fluchtend angeordnet sind.

Die Montage der in den Figuren 4 und 5 dargestellten Halterung 3 vollzieht sich zunächst einmal wie bei den zuvor beschriebenen Halterungen durch Einsetzen des Verbindungselements 6 vom Behälterinneren aus in die Öffnung 5, und zwar mit dem stirnseitig in das Verbindungselement 6 eingesetzten Stützteller 13. Sodann wird von außen der Stützdeckel 16 aufgesetzt. Durch die Bohrungen 17 von Stützteller 13 und Stützdeckel 16 wird eine Blindniete 18 eingesetzt, die den Stützdeckel 16 und den Stützteller 13 gegeneinander zieht, wobei der Stützteller 13 bzw. dessen krallenförmige Fortsätze 14 unter Vorspannung gegen die Innenwandung des Kraftstoffbehälters 1 gepresst werden und gleichzeitig der Stützdeckel 16 in der stirnseitigen Öffnung des Verbindungselements 6 gesichert wird. Anschließend wird der Deckel 9 mit der Außenwandung des Kraftstoffbehälters 1 verschweißt. Diese Art der Verbindung hat den Vorzug, dass sie ohne nennenswerten Aufwand kaum noch lösbar ist und dass durch die Verkrallung der krallenförmigen Fortsätze 14 auf der Innenseite der Behälterwandung 4 eine hinreichende Sicherung des Funktionsbauteils, das heißt in diesem Fall des Roll-Over-Ventils 2, in dessen Umfangsrichtung erzielt wird.

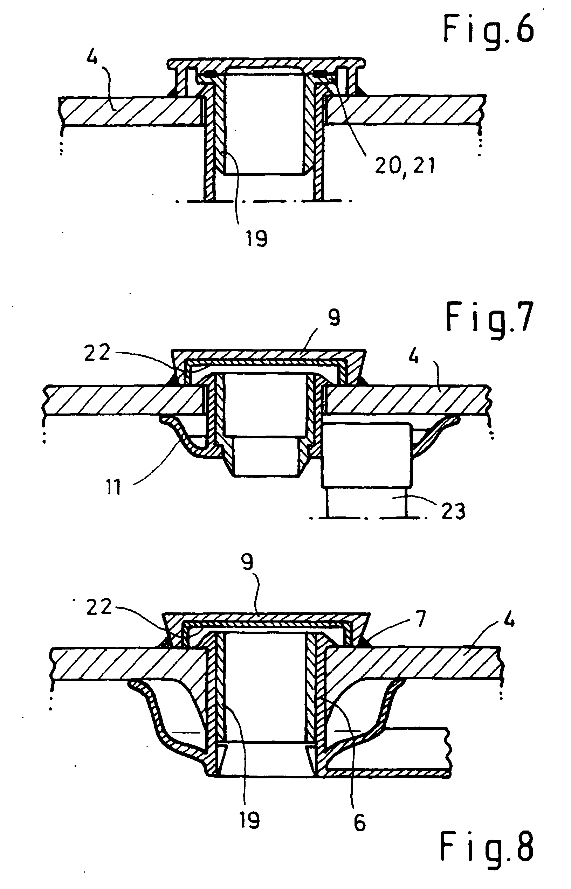

Eine weitere Variante der Halterung 3 ist in Figur 6 dargestellt. Dort ist als Spreizelement 8 eine Hülse 19 stirnseitig in das Verbindungselement 6 eingesetzt, wobei die Hülse 19 mit einem umlaufenden Kragen 20 versehen ist, der eine Schweißfläche 21 zur Verschweißung mit der Abdeckkappe 9 bildet. Auf diese Art und Weise wird sowohl eine axiale Sicherung des Verbindungselements 6 als auch die Abdichtung der Öffnung 5 über die Abdeckkappe 9 erzielt.

Bei dem in Figur 7 dargestellten Ausführungsbeispiel ist die Abdeckkappe 9 als Zweikomponentendeckel mit einem inneren Aluminiumdeckel 22 ausgebildet. Darüber hinaus ist ein mit 23 bezeichnetes Funktionsbauteil seitlich an dem Verbindungselement 6 befestigt, wie dies beispielsweise auch in Figur 1 dargestellt ist. Alternativ kann vorgesehen sein, dass das verbindungselement 6 auf seiner dem Behälterinneren zugekehrten Seite als Steckadapter zur formschlüssigen Aufnahme eines Funktionsbauteils ausgebildet ist.

Bei dem in Figur 8 dargestellten Ausführungsbeispiel ist die Halterung 3 in ein Blasnadelloch eingesetzt, wobei deutlich zu sehen ist, dass die Dicke der Behälterwand 4 durch Einschub im unmittelbar an das Verbindungselement 6 angrenzenden Bereich deutlich erhöht ist. Entsprechend weit ausladend sind die Stützfüße 11 ausgebildet, deren Auflagepunkt an der Innenseite der Behälterwand 4 einen Abstand vom Rand der Öffnung 5 besitzen, der jeweils mindestens der Hälfte des Durchmessers des verbindungselements 6 entspricht.

Es ist für den Fachmann ohne Weiteres ersichtlich, dass die Öffnung (5) in der Behälterwand (4) auch im Bereich einer Einmuldung desselben vorgesehen sein kann. Dann kann anstelle einer Abdeckkappe (9) ein die Mulde vollständig verschließender Deckel vorgesehen sein, der vorzugsweise mit der Außenseite der Behälterwand (4) verschweißt ist.

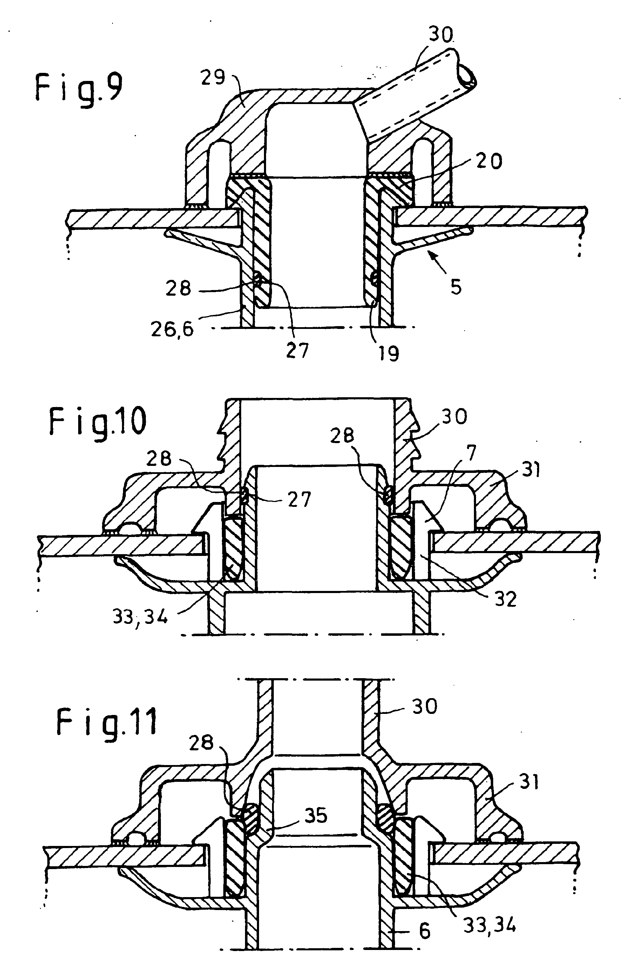

Die in den Figuren 9 bis 11 dargestellten Ausführungsbeispiele unterscheiden sich insoweit von den bisher beschriebenen Ausführungsbeispielen, als die Behälterwand 4 nicht mit einer Abdeckkappe oder dergleichen verschlossen ist, sondern diese einen dichtabschließenden Durchgang für eine aus dem Kraftstoffbehälter herauszuführende Leitung bildet.

Bei dem in Figur 9 dargestellten Ausführungsbeispiel ist als Funktionsbauteil 23 ein Entlüftungsventil mit einem Ventilgehäuse und einer Ventilgehäusebefestigung 26 vorgesehen. Die Ventilgehäusebefestigung dient als Verbindungselement 6 und ist wie vorstehend beschrieben in der Öffnung 5 verrastet. Als Sicherungselement ist ebenso wie bei dem Ausführungsbeispiel gemäß Figur 6 eine Hülse 19 vorgesehen, die in ihrem Außenumfang eine umlaufende Nut 27 mit einer von diesen aufgenommenen O-Ring-Dichtung 28 aufweist. Eine Abdichtung zwischen der Hülse 19 einerseits und der Ventilgehäuse-Befestigung 26 andererseits ist in diesem Falle aus Funktionsgründen vorgesehen. Es ist für den Fachmann selbstverständlich, dass eine solche Abdichtung auch durch entsprechende Tolerierung der Hülse 19 erzielt werden kann. Die O-Ring-Dichtung liegt gegen die Innenwandung des verbindungselements 6 bzw. der Ventilgehäuse-Befestigung 26 dichtend an. An dem von dem ventilgehäuse 25 abliegenden Ende der Hülse 19 ist ein umlaufender Kragen 20 vorgesehen, der zusätzlich als Befestigungsflansch für die Abdeckkappe 29 dient. Die Abdeckkappe 29 ist darüber hinaus randseitig mit der Behälterwand 4 verschweißt. Wie ohne Weiteres aus der Figur ersichtlich ist, ist die Lage der Schweißflächen so gewählt, dass eine automatisierte Montage der Abdeckkappe 29 unter Inkaufnahme von Fluchtungsfehlern bei der Ausrichtung derselben ohne Weiteres möglich ist. Die Abdeckkappe 29 ist kein Verschluss im Sinne der vorhergehend beschriebenen Ausführungsbeispiele, vielmehr ist diese als Anschlussbauteil mit einem Anschlusselement 30 versehen. An das Anschlusselement kann beispielsweise eine nicht dargestellte Entlüftungsleitung zu einem Kraftstoffdampffilter angeschlossen sein. Als Anschlusselement kann ein Anschlussnippel, ein Anschlussgewinde oder dergleichen vorgesehen sein.

Im Falle des in Figur 9 gezeigten Ausführungsbeispiels kommunizieren das nicht dargestellte Ventilgehäuse, die Ventilgehäusebefestigung 26 und die Abdeckkappe 29. Die Öffnung 5 wird sowohl zur Montage des Ventilgehäuses als auch zur Durchführung einer Behälterentlüftung genutzt.

Bei dem in Figur 10 dargestellten Ausführungsbeispiel ist das Verbindungselement 6 deutlich durch die Öffnung 5 in der Behälterwand 4 hinausgeführt und an seinem von dem Funktionsbauteil 23 abliegenden Ende mit einer in einer Nut 27 außen umlaufenden O-Ring-Dichtung 28 versehen. An diesem Ausführungsbeispiel ist ebenfalls kein Verschluss der Öffnung vorgesehen, vielmehr mündet diese in ein Anschlusselement 30, der mit einem Befestigungssockel 31 mit der äußeren Behälterwand 4 verschweißt ist. Das Verbindungselement 6 ist mit mehreren umfänglich angeordneten Rastfedern 32 versehen, die jeweils die Öffnung 5 hintergreifende Schnappnasen 7 aufweisen. Zwischen die Rastfedern 32 und der Wandung des Verbindungselements 6 wird eine Art Ringraum 33 gebildet, in die ein Sicherungsring 34 eingesetzt ist. Das Ausführungsbeispiel gemäß Figur 11 unterscheidet sich insoweit von dem in Figur 9 beschriebenen, als dort das zur Außenseite des Kraftstoffbehälters 1 weisende Ende des Verbindungselements 6 angefast ist, wohingegen der Befestigungssockel 31 in etwa in dessen Längsmittelachse eine konische Glocke bildet, die zusammen mit der umlaufenden Fase des Verbindungselements 6 eine Selbstzentrierung dieses Bauteils bei maschineller Montage und Verschweißung desselben gewährleistet.

Im Falle des in Figur 11 dargestellten Ausführungsbeispiels ist der aus dem Kraftstoffbehälter 1 herausragende Teil des Verbindungselementes 6 mit einem umlaufenden Absatz 35 versehen, auf dem eine O-Ring-Dichtung 28 aufliegt. Dieser Teil des verbindungselements 6 ist ebenfalls aus den oben genannten Gründen mit einer umlaufenden Fase versehen. Die O-Ring-Dichtung 28 dichtet das Verbindungselement 6 gegen die Abdeckkappe 29 ab, die ebenfalls mit einem Anschlusselement 30 versehen ist. Im Übrigen entspricht die in Figur 11 dargestellte Halterung derjenigen in Figur 10. Die Abdeckkappe 29 kann beispielsweise auch aus einem mehrschichtigen Co-Extrudat mit einer integrierten Barriereschicht als Sperre gegen Kohlenwasserstoffe ausgebildet sein.

### Bezugszeichenliste

- 1: Kraftstoffbehälter
- 2: Roll-Over-Ventil
- 3: Halterung
- 4: Behälterwand
- 5: Öffnung
- 6: Verbindungselement
- 7: Schnappnasen
- 8: Spreizelement
- 9: Abdeckkappe
- 10: Fortsatz
- 11: Stützfüße
- 12: Rohrabschnitt
- 13: Stützteller
- 14: krallenförmige Fortsätze
- 15: Ausnehmungen
- 16: Stützdeckel
- 17: Bohrungen
- 18: Blindniete
- 19: Hülse
- 20: Kragen
- 21: Schweißfläche
- 22: Aluminiumdeckel
- 23: Funktionsbauteil
- 26: Ventilgehäuse-Befestigung
- 27: Nut
- 28: O-Ring-Dichtung
- 29: Abdeckkappe
- 30: Anschlusselement
- 31: Befestigungssockel
- 32: Rastfedern
- 33: Ringraum
- 34: Sicherungsring
- 35: Absatz

## Patentansprüche

1. Kraftstoffbehälter aus Kunststoff mit wenigstens einer Halterung (3) zur Befestigung von Funktionsbauteilen (2, 23) im Inneren des Behälters, wobei die Halterung (3) wenigstens ein Verbindungselement (6) zur Aufnahme des Funktionsbauteils(23) aufweist oder das verbindungselement (6) als Bestandteil des Funktionsbauteils (23) ausgebildet ist, **dadurch gekennzeichnet, daß** das Verbindungselement in einer Öffnung der Behälterwand (4) diese durchsetzend verrastet ist und wobei die Öffnung (5) an der Behälteraußenseite mit einem Verschluss in Form eines Deckels oder einer Abdeckkappe (9) gegenüber der Atmosphäre abgedichtet ist oder mit einem Anschlussbauteil versehen ist.

2. Kraftstoffbehälter nach Anspruch 1, **dadurch gekennzeichnet, dass** der Verschluss oder das Anschlussbauteil mit der Behälterwandung (4) verschweißt sind.

3. Kraftstoffbehälter nach einem der Ansprüche 1 oder 2, **dadurch gekennzeichnet, dass** das verbindungselement (6) an seinem Außenumfang Rastelemente aufweist, die in der Einbaulage formschlüssig die Behälterwandung (4) hintergreifen.

4. Kraftstoffbehälter nach Anspruch 3, **dadurch gekennzeichnet, dass** das Verbindungselement (6) als etwa rohrförmiger, stirnseitig offener Körper ausgebildet ist, der an seinem Außenumfang federnd nachgiebig ausgebildete Wandabschnitte aufweist, auf denen Schnappnasen (7) als Rastelemente vorgesehen sind.

5. Kraftstoffbehälter nach einem der Ansprüche 1-4, **dadurch gekennzeichnet, dass** in die offene Stirnseite des Verbindungselements (6) in Einbaulage desselben ein Sicherungselement eingesetzt ist, welches eine Verriegelung der Rastelemente in der die Behälterwandung (4) hintergreifenden Stellung bewirkt.

6. Kraftstoffbehälter nach einem der Ansprüche 1-5, **dadurch gekennzeichnet, dass** das Sicherungselement als in die Stirnseite des Verbindungselements (6) einzusetzendes Spreizelement (8) ausgebildet ist.

7. Kraftstoffbehälter nach einem der Ansprüche 1-6, **dadurch gekennzeichnet, dass** mindestens ein Gegenhalter zur axialen Fixierung des verbindungselements (6) in seiner Einbaulage vorgesehen ist.

8. Kraftstoffbehälter nach Anspruch 7, **dadurch gekennzeichnet, dass** die Abdeckkappe (9) als Gegenhalter ausgebildet ist.

9. Kraftstoffbehälter nach Anspruch 7, **dadurch gekennzeichnet, dass** als Gegenhalter federnd ausgebildete Stützfüße (11) oder ein entsprechend ausgebildeter Stützkragen am Außenumfang des Verbindungselements (6) vorgesehen sind, die so angeordnet sind, dass sie das Verbindungselement (6) in der Einbaulage unter Vorspannung gegen die Innenseite der Behälterwandung (4) abstützen.

10. Kraftstoffbehälter nach Anspruch 7, **dadurch gekennzeichnet, dass** als Gegenhalter ein Stützteller (13) vorgesehen ist, der mit einem in die offene Stirnseite des Verbindungselements (6) eingesetzten Stützdeckel (16) über ein diese verbindendes Zugelement zusammenwirkt und sich dadurch unter Vorspannung gegen die Behälterwandung (4) auf deren Innenseite abstützt.

11. Kraftstoffbehälter nach Anspruch 10, **dadurch gekennzeichnet, dass** als Zugelement eine Blindniete (18) vorgesehen ist.

12. Kraftstoffbehälter nach Anspruch 10 oder 11, **dadurch gekennzeichnet, dass** der Stützdeckel (16) als Sicherungselement dient.

13. Kraftstoffbehälter nach einem der Ansprüche 10-12, **dadurch gekennzeichnet, dass** der Stützteller (13) an seinem Außenumfang auf seiner der Innenseite der Behälterwandung (4) zugekehrten Seite mit Krallen oder krallenartigen Fortsätzen (14) versehen ist.

14. Kraftstoffbehälter nach Anspruch 1, **dadurch gekennzeichnet, dass** das Anschlussbauteil als Anschlusselement (30) ausgebildet ist, wobei das Verbindungselement (6) und das Funktionsbauteil (23) im Sinne einer Durchführung miteinander verbunden sind.

15. Kraftstoffbehälter nach Anspruch 1, **dadurch gekennzeichnet, dass** das Anschlussbauteil als Abdeckkappe (29) mit Anschlusselement (30) ausgebildet ist, wobei das verbindungselement (6) und das Funktionsbauteil (23) im Sinne einer Durchführung miteinander kommunizieren.

16. Kraftstoffbehälter nach einem der Ansprüche 1, 3 oder 4, **dadurch gekennzeichnet, dass** das Anschlussbauteil als in das Verbindungselement (6) eingesetzte Hülse (19) ausgebildet ist, die mit einem umlaufenden Kragen (20) als Befestigungsflansch für ein weiteres Anschlussbauteil versehen ist.

## Claims

1. A fuel tank of plastic material comprising at least one holding means (3) for fixing functional components (2, 23) in the interior of the tank, wherein the holding means (3) has at least one connecting element (6) for receiving the functional component (23) or the connecting element (6) is in the form of a constituent part of the functional component (23), **characterised in that** the connecting element is latched in an opening in the tank wall (4) in a condition of passing therethrough and wherein the opening (5) is sealed off with respect to the atmosphere at the outside of the tank with a closure in the form of a cover or a cover cap (9) or is provided with a connection component.

2. A fuel tank according to claim 1 **characterised in that** the closure or the connection component are welded to the tank wall (4).

3. A fuel tank according to one of claims 1 and 2 **characterised in that** the connecting element (6) has at its outer periphery latching elements which in the installation position engage in positively locking relationship behind the tank wall (4).

4. A fuel tank according to claim 3 **characterised in that** the connecting element (6) is in the form of a substantially tubular body which is open at its ends and which at its outside periphery has resiliently yielding wall portions, on which snap-engagement noses (7) are provided as latching elements.

5. A fuel tank according to one of claims 1 to 4 **characterised in that** in the installation position of the connecting element (6) a securing element is fitted into the open end of the connecting element (6), the securing element providing for locking of the latching elements in the position of engaging behind the tank wall (4).

6. A fuel tank according to one of claims 1 to 5 **characterised in that** the securing element is in the form of a spreading element (8) which is to be fitted into the end of the connecting element (6).

7. A fuel tank according to one of claims 1 to 6 **characterised in that** there is provided at least one co-operating holder for axially fixing the connecting element (6) in its installation position.

8. A fuel tank according to claim 7 **characterised in that** the cover cap (9) is in the form of the co-operating holder.

9. A fuel tank according to claim 7 **characterised in that** resilient support legs (11) or a support collar of corresponding configuration are provided at the outside periphery of the connecting element (6) as the co-operating holder, being so arranged that they support the connecting element (6) in the installation position in a biased condition against the inside of the tank wall (4).

10. A fuel tank according to claim 7 **characterised in that** a support plate (13) is provided as the co-operating holder, which co-operates with a support cover (16) fitted into the open end of the connecting element (6) by way of a tie element connecting same and is thereby supported in a biased condition against the tank wall (4) on the inside thereof.

11. A fuel tank according to claim 10 **characterised in that** a blind rivet (18) is provided as the tie element.

12. A fuel tank according to claim 10 or claim 11 **characterised in that** the support cover (16) serves as the securing element.

13. A fuel tank according to one of claims 10 to 12 **characterised in that** at its outside periphery on its side towards the inside of the tank wall (4) the support plate (13) is provided with claws or claw-like projections (14).

14. A fuel tank according to claim 1 **characterised in that** the connection component is in the form of a connection element (30), wherein the connecting element (6) and the functional component (23) are connected together in the manner of a pass-through means.

15. A fuel tank according to claim 1 **characterised in that** the connection component is in the form of a cover cap (29) with connection element (30), wherein the connecting element (6) and the functional component (23) are connected together in the manner of a pass-through means.

16. A fuel tank according to one of claims 1, 3 and 4 **characterised in that** the connection component is in the form of a sleeve (19) which is fitted into the connecting element (6) and which is provided with a peripherally extending collar (20) as a fixing flange for a further connection component.

## Revendications

1. Réservoir de carburant en matière plastique avec au moins un support (3) pour fixer des composants de fonctionnement (2, 23) à l'intérieur du réservoir, sachant que le support (3) présente au moins un raccord (6) pour le logement du composant de fonctionnement (23) ou que le raccord (6) est conçu en tant qu'élément constitutif du composant de fonctionnement (23), **caractérisé en ce que** le raccord est enclenché dans une ouverture de la paroi du réservoir (4) en traversant celle-ci et sachant que l'ouverture (5) est isolée de l'atmosphère, de façon étanche, au niveau du côté extérieur du réservoir avec un obturateur sous forme d'un couvercle ou d'un capuchon (9) ou est munie d'un composant de raccordement.

2. Réservoir de carburant selon la revendication 1, **caractérisé en ce que** l'obturateur ou le composant de raccordement est soudé avec la paroi du réservoir (4).

3. Réservoir de carburant selon l'une quelconque des revendications 1 ou 2, **caractérisé en ce que** le raccord (6) présente, au niveau de sa périphérie extérieure, des éléments d'enclenchement qui saisissent par derrière, de façon solidaire, la paroi du réservoir (4) en position de montage.

4. Réservoir de carburant selon la revendication 3, **caractérisé en ce que** le raccord (6) est conçu en tant que corps ouvert côté face, à peu près tubulaire et présentant, au niveau de sa périphérie extérieure, des sections de paroi réalisées de façon souple et élastique sur lesquelles des talons d'enclenchement (7) sont prévus en tant qu'éléments d'enclenchement.

5. Réservoir de carburant selon l'une quelconque des revendications 1 à 4, **caractérisé en ce qu'**en position de montage du raccord, un élément de sûreté est inséré dans le côté frontal ouvert du raccord (6), occasionnant un verrouillage des éléments d'enclenchement dans la position saisissant par derrière la paroi du réservoir (4).

6. Réservoir de carburant selon l'une quelconque des revendications 1 à 5, **caractérisé en ce que** l'élément de sûreté est conçu en tant qu'élément d'écartement (8) à insérer dans le côté frontal du raccord (6).

7. Réservoir de carburant selon l'une quelconque des revendications 1 à 6, **caractérisé en ce qu'**au moins un contre-appui est prévu pour fixer axialement le raccord (6) dans sa position de montage.

8. Réservoir de carburant selon la revendication 7, **caractérisé en ce que** le capuchon (9) est conçu en tant que contre-appui.

9. Réservoir de carburant selon la revendication 7, **caractérisé en ce que** sont prévus, au niveau de la périphérie extérieure du raccord (6), en tant que contre-appuis, des pieds d'appui (11) souples ou une collerette de support conçue de façon appropriée, disposés de sorte qu'ils appuient, sous précontrainte, le raccord (6), en position de montage, contre le côté intérieur de la paroi du réservoir (4).

10. Réservoir de carburant selon la revendication 7, **caractérisé en ce qu'**est prévue, en tant que contre-appui, une plaque d'appui (13) qui concoure avec un couvercle support (16) inséré dans le côté frontal ouvert du raccord (6) par le biais d'un élément de traction les reliant et qui s'appuie, sous précontrainte, contre la paroi du réservoir (4) sur son côté intérieur.

11. Réservoir de carburant selon la revendication 10, **caractérisé en ce qu'**est prévu, en tant qu'élément de traction, un rivet aveugle (18).

12. Réservoir de carburant selon la revendication 10 ou 11, **caractérisé en ce que** le couvercle support (16) sert d'élément de sûreté.

13. Réservoir de carburant selon l'une quelconque des revendications 10 à 12, **caractérisé en ce que** la plaque d'appui (13) est munie de griffes ou de prolongements (14) de type griffe au niveau de sa périphérie extérieure, sur son côté adjacent au côté intérieur de la paroi du réservoir (4).

14. Réservoir de carburant selon la revendication 1, **caractérisé en ce que** le composant de raccordement est conçu en tant qu'élément de raccordement (30), sachant que le raccord (6) et le composant de fonctionnement (23) sont reliés ensemble au sens d'une réalisation.

15. Réservoir de carburant selon la revendication 1, **caractérisé en ce que** le composant de raccordement est conçu en tant que capuchon (29) avec élément de raccordement (30), sachant que le raccord (6) et le composant de fonctionnement (23) communiquent ensemble au sens d'une réalisation.

16. Réservoir de carburant selon l'une quelconque des revendications 1, 3 ou 4, **caractérisé en ce que** le composant de raccordement est conçu en tant que douille (19) insérée dans le raccord (6) et munie d'une collerette (20) circulaire en tant que bride de fixation pour un autre composant de raccordement.
